# EUROPÄISCHE PATENTANMELDUNG

(11) **EP 3 130 830 A1**
(43) Veröffentlichungstag der Anmeldung: **15.02.2017**
(21) Anmeldenummer: 16001165.6
(22) Anmeldetag: 21.05.2016
(51) Int. Cl.: F16L 23/00, F16L 23/036, F16L 23/24

(54) **FLANSCHVERBINDUNG MIT EINER ÜBERGREIFENDEN KRAFT- UND FORMSCHLÜSSIGEN VERBINDUNGSANORDNUNG**

(30) Priorität: 12.08.2015 DE 102015010511
(71) Anmelder: Schlemenat, Alfred W., 45701 Herten (DE)
(72) Erfinder: Schlemenat, Alfred W., 45701 Herten (DE)

(57) **Zusammenfassung**

Flanschverbindung mit einer übergreifenden kraft- und formschlüssigen Verbindungsanordnung.

Undichtigkeiten an Flanschverbindungen infolge von Druckstößen, Dampf- und Wasserschlägen oder Zusatzbelastungen werden beseitigt bzw. dauerhaft vermieden. Vorhandene Flanschverbindungen sind ohne Trenn- und Schweißarbeiten vor Ort durch Nutzung einer übergreifenden kraft- und formschlüssigen Verbindungsanordnung umzugestalten.

Eine Hülse (5), die zwei Flansche (3) übergreift, weist an einem axialen Ende eine Nut (6) zur Aufnahme von Abschersegmente (8) auf. Um Kantenpressungen an den Anlageflächen in der Nut auszuschließen, sind die Abschersegmente (8) mit Schrauben (2) jeweils an einem Flansch (3) verspannt. Am anderen Ende der Hülse (5) ist eine Aussparung mit einer Anlagefläche (7) eingearbeitet, in der keilförmige Spannelemente (9) angeordnet sind, die zwischen ihren Keilflächen und ihren Verspannachsen (12) einen zur Selbsthemmung führenden Haftreibungswinkel aufweisen. Mit dem Verspannen der Spannelemente (9) in Richtung ihrer Verspannachse (12) ist ein dauerhafter Kraft- und Formschluss zwischen den zusammenwirkenden Bauteilen zur Übertragung von Belastungen über die Hülse (5) gegeben.

## Beschreibung

Die Erfindung betrifft eine lösbare Verbindungsanordnung, bei der eine Flanschverbindung, wie sie in nahezu allen Industriebereichen als Standardbauteil zum Einsatz gelangt, mit einer übergreifenden kraft- und formschlüssigen Verbindung zu verspannen ist.

Undichtigkeiten, wie sie u.a. durch dynamische Druckänderungen infolge von Druckstößen, Dampf- und Wasserschlägen sowie durch eine Vielzahl von thermischen Lastwechseln oder extremen Zusatzbelastungen sogar nach erfolgten Abdichtungsmaßnahmen immer wieder auftreten, sind mit den Merkmalen der Erfindung sowohl zu beseitigen als auch für die weitere betriebliche Nutzung auszuschließen.

Im Betriebsalltag gelten Undichtigkeiten an Flanschverbindungen als nichts Außergewöhnliches. Die zur Beseitigung anfallenden Kosten werden einschließlich nicht unerheblicher Folgekosten als "scheinbar unabwendbar" in Kauf genommen. Hinsichtlich der Ursachen werden häufig Montagefehler und menschliche Unzulänglichkeiten herausgestellt. Aktuelle Erkenntnisse des Erfinders weisen jedoch aus, dass Undichtigkeiten bei mehreren im Krafthauptschluss (KHS) zu nutzenden Dichtungsmaterialien sogar systembedingt auftreten müssen. Denn treten in der Ebene von Flanschverbindungen u.a. nicht berücksichtigte oder von der Höhe nicht bekannte Biegemomente auf oder weisen Rohrleitungssysteme hinsichtlich auftretender Biegemomentbelastungen eine ungünstige Geometrie auf, wirken die aus dem Kräftepaar sich einstellenden - Druckkräfte, ggf. weitere axiale Druckbelastungen zusätzlich auf die bereits während der Montage vorverformte KHS-Dichtung. Führen diese zu einem Überschreiten der Dichtungsstandkraft, ist das elastische Rückfederungsverhalten der Dichtung nicht mehr gegeben mit der Folge, dass Undichtigkeiten auftreten.

Weitere Feststellungen des Erfinders lassen erkennen, dass Undichtigkeiten aufgrund eines ignorierten Wissensstands aus den 1950er Jahren bei vollflächig in Blocklage gegeneinander verspannten Stirnflächen mit im Kraftnebenschluss (KNS) angeordneten Dichtungen ebenfalls auftreten.

So dokumentiert S. Schwaigerer bereits in seinem Fachbuch "Festigkeitsberechnungen im Dampfkessel-, Behälter- und Rohrleitungsbau", Springer Verlag, Berlin, 3. Auflage 1978 bzgl. auf Block liegender Flansche in Pkt. 12.7, dass die Flanschblätter in ihrem Bestreben, sich bei Belastungen schräg zu stellen, eine im äußeren 0-Bereich gegeneinander gerichtete Stützung erfahren, während die Schrauben infolge Hebelwirkung durch den sich verändernden Hebelarm stärker belastet werden. Zum einen wird in nahezu der gesamten Literatur der KNS durch auf Block verspannte Stirnflächen mit einer in einer Nut liegenden Dichtung dargestellt, zum anderen ist das aufgezwungene Verformungsverhalten dieser Bauart durch die Stützwirkung der am Flansch angeschlossenen Zylinderschale mittels FEM-Verformungsanalysen ziemlich exakt nach der Theorie II. Ordnung zu bestimmen. Trotzdem unterbleibt der erforderliche Hinweis auf die sich einstellenden extrem erhöhten Schraubenbelastungen.

So erhöhen sich bei Normflanschen die Schraubenbelastungen um mehr als das Doppelte, in den Regelwerken wird der Einfluss der gegeneinander gerichteten Stützung der Flanschblätter dagegen nicht oder nur unzureichend berücksichtigt. Die überlasteten Schrauben erfahren bei jeder Belastungsänderung infolge des Relaxationseinflusses zwar nur eine äußerst minimale Längung, diese addiert sich jedoch mit jedem Lastwechsel, so dass die für die Dichtheit erforderliche Dichtungsvorpressung bis zum Eintreten der Undichtigkeit stets verringert wird. Es ist jedoch sekundär, ob eine Leckage durch eine ggf. unsachgemäß aufgebrachte Vorverformungskraft während der Montage, durch eine von der Größe unbekannte oder nicht berücksichtigte Zusatzbelastung, durch dynamische Druckänderungen oder durch den Einfluss der Schraubenrelaxation eingetreten ist.

Vor allem in relativ langen flüssigkeitsführenden Rohrleitungen, in denen u.a. bei einem zu schnellen oder unkontrollierten Schließen von Armaturen die kinetische Energie infolge Massenträgheit der Flüssigkeit in eine nicht unerhebliche Kraft umgewandelt wird, sind es überwiegend die Schrauben in Flanschverbindungen, die durch derart überhöhte Belastungen infolge Schraubenrelaxation negativ beeinflusst werden. So zeigen sich darauf zurückzuführende Undichtigkeiten vermehrt an nachträglich auf Rohrleitungsbrücken montierten Leitungen in der Chemie und Petrochemie, die zur Vermeidung von Explosionsgefahren ohne Trenn- und Schweißarbeiten erstellt und somit nahezu vollständig aus geflanschten Rohrleitungsabschnitten zusammengesetzt sind.

Überlegungen des Erfinders führten dazu, die erforderlichen Sicherheiten an den zuvor zitierten zur Undichtigkeit neigenden (Norm-) Flanschverbindungen nach dem "Gürtel-Hosenträger-Prinzip" durch die Teilanwendung einer bereits weltweit zur Anwendung gelangenden kraft- und formschlüssigen Verbindungsanordnung nach der EP 0 775 863 B1 zu erreichen. Denn an dieser können die beschriebenen Undichtigkeiten nicht auftreten. Die Verspannung erfolgt mit keilförmigen Spannelementen, die zwischen ihren Verspannflächen und ihrer Verspannachse einen Winkel aufweisen, der nicht größer ist als der Haftreibungswinkel der reibschlüssig zusammenwirkenden Materialien. Sämtliche Belastungen werden in Übereinstimmung mit der Theorie ausschließlich durch Haftreibung übertragen. Hohe Kerbwirkungszahlen aufweisende Schrauben sind an der Übertragung von Betriebsbelastungen nicht beteiligt, unabhängig davon, ob die zu verbindenden Bauteile sich radial nach innen oder radial nach außen erstrecken. Relativ kleine Schrauben, mit denen zuvor der verspannte Zustand erzeugt wurde, verhindern einen Übergang von der Haft- zur Gleitreibung.

Zum Herausfinden von möglichen Schwachstellen wurden Tests an einer umgestalteten 325 bar Verbindung eines Röhrenreaktors durchgeführt, indem der Probedruck von 488 bar bis zum Versagen der Verbindung heraufgesetzt werden sollte. Der Test mußte jedoch bei mehr als dem 5-fachen des Betriebsdrucks, bei 1750 bar abgebrochen werden, da nicht die Verbindung, sondern die aus hochlegiertem Stahl bestehenden Rohrkörper mit einer Wandstärke von 25 mm kurz vor dem Zerbersten standen. Die zusammenwirkenden Bauteile der kraft- und formschlüssigen Verbindung wiesen dagegen keine Beschädigungen auf. Herauszustellen ist vor allem, dass ein vergleichbarer Test mit einer klassischen Flanschverbindung bereits bei einem rechnerisch ermittelten Probedruck von ca. 690 bar infolge Schraubenlängung versagen würde.

Aufgabe der Erfindung ist es, die an den klassischen Flanschverbindungen immer wieder auftretenden Undichtigkeiten sowohl an Neuanlagen zu vermeiden als auch an vorhandenen Ausführungen, vor allem ohne Trenn- und Schweißarbeiten vor Ort zu beseitigen und für den weiteren Betrieb dauerhaft auszuschließen.

Diese Aufgaben werden erfindungsgemäß durch die Merkmale der Ansprüche 1 und 4 gelöst.

Entsprechend den Merkmalen des Anspruchs 1 übergreift eine Hülse eine komplett mit Schrauben verspannte Flanschverbindung. Die Hülse weist an einem axialen Ende eine umlaufende Nut auf. In dieser liegen analog dem Wirkprinzip eines Scherring-Verschlusses einzelne auf Abscheren belastete Segmente an einem der Flansche an. An den bekannten extrem belasteten Scherring-Verschlüssen führen Bauteiltoleranzen im Bereich der Nut zu einem Verkanten der Segmente und folglich zu erhöhten Kantenpressungen. Um an der erfindungsgemäßen Verbindung ein örtliches Fließen im Bereich der Anlageflächen auszuschließen, werden die Abschersegmente zum Erreichen einer stets vollflächigen Anlage jeweils mit Schrauben an dem Flansch verspannt. Dazu ist schrittweise Schraube für Schraube aus der komplett verspannten Verbindung herauszunehmen, so dass das jeweilige Segment in die Nut der zuvor übergeschobenen Hülse einzusetzen und wieder mit den Flanschen zu verspannen ist. Die Vorverformung der Dichtung wird durch die herausgenommene Schraube nur unwesentlich beeinflusst, die Hülse ist jedoch in axialer Richtung fixiert.

Das gegenüberliegende Ende der Hülse weist eine Aussparung mit einer Anlagefläche zur Aufnahme der keilförmigen Spannelemente nach der EP 0 775 863 B1 auf. Zum Erreichen einer nahezu vollflächigen Anlage der Spannelemente sind zwischen diesen und dem Flansch Distanzkörper anzuordnen. Diese weisen entweder ein Innengewinde auf und sind zugleich Teil der Flanschverschraubung oder sie überdecken die am Flanschblatt hervorstehenden Schraubenköpfe bzw. Muttern.

Mit dem Verspannen der Spannelemente in Richtung ihrer Verspannachse und dem somit erzeugten Kraft- und Formschluss zwischen den zusammenwirkenden Bauteilen ist stets die Sicherheit gegeben, dass selbst bei einem theoretischen Totalversagen der Flanschverschraubung sämtliche der auftretenden Belastungen schadlos von der übergreifenden Hülse aufgenommen werden. Gemäß dem zuvor beschriebenen Test würde die Hülse sogar bei mehr als dem 5-fachen der ursprünglichen Betriebsbelastung keine Schädigung aufweisen. Undichtigkeiten infolge von Schraubenrelaxation können somit nicht auftreten. Zudem wirken auf die Hülse nur die Lastanteile, die sich infolge einer Überbelastung der Schrauben einstellen, obwohl diese gemäß der nach gültigem Regelwerk erfolgten Dimensionierung und Abnahme der Ursprungsverbindung nicht auftreten dürften.

Eine negative Dichtungsbeeinflussung kann somit weder infolge von Schraubenrelaxation noch durch ein Zerstören der Dichtungsstandkraft einer im KNS angeordneten Dichtung infolge des Überpressens auftreten. Das gilt auch für Dichtungen im KHS, die aufgrund eines Relaxationsverhaltens eine über einen langen Betriebszeitraum nahezu konstante Dichtungs-Flächenpressung aufweisen, beispielsweise RTJ Metall Ring-Joint-Dichtungen. Die Dichtheit der kombinierten Verbindung ist somit stets gegeben.

Ferner sind sowohl die bisherigen Erfahrungen zum Montieren der klassischen Flanschverbindungen, u.a. beim Einlegen und Vorverformen der Dichtung, bei der Nutzung von Montagehilfsmitteln bei nicht fluchtenden Flanschen zueinander und bei der Durchführung erforderlicher Druckproben in Verbindung mit den Fertigungs- und Montageerfahrungen der kraft- und formschlüssigen Verbindung weiterhin vorteilhaft zu nutzen. Das Verspannen mit den Spannelementen erfolgt erst nach dem Verspannvorgang der Ursprungs-Flanschverbindung, deren Funktion weiterhin unverändert besteht. Die aufzubringenden Kräfte zum Vorverformen der Dichtung sind im jeweiligen Nachweis der vorhandenen Flanschverbindung berücksichtigt, folglich entfallen bis auf wenige Ausnahmen zusätzliche Berechnungsnachweise und Abnahmen. Beide Systeme lassen sich als primäre Maßnahme zur Risikominderung vorteilhaft miteinander kombinieren, wobei der vertretbare wirtschaftliche Aufwand zum Erreichen der zusätzlichen Sicherheit gegenüber den bisherigen Ausführungen in einem positiven Verhältnis steht.

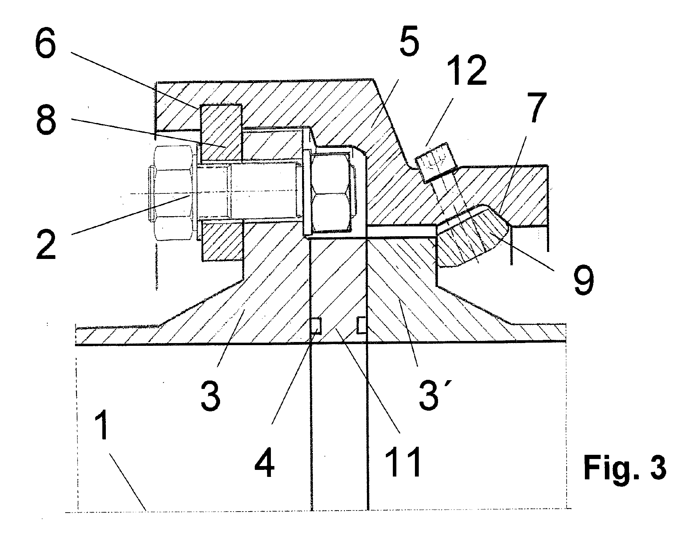

Da die Hülse zur Außenkontur der Flansche keinen vorspringenden Bund oder Absatz aufweist, ist sie problemlos über die Flanschverbindung oder über einen einzelnen Flansch zu schieben. Dadurch ergeben sich weitere vorteilhafte Nutzungen. Um beispielsweise die an einem Flanschblatt infolge des radialen Temperaturgradienten auftretenden Stülpverformungen an hochtemperaturbelasteten Flansch / Blindflanschverbindungen zu minimieren und zugleich den Einfluss der Schraubenrelaxation vollständig auszuschalten, kann einer der beiden Flansche gemäß Anspruch 6 als Flanschbund (s. Fig. 3) oder als Blindflansch ausgeführt werden.

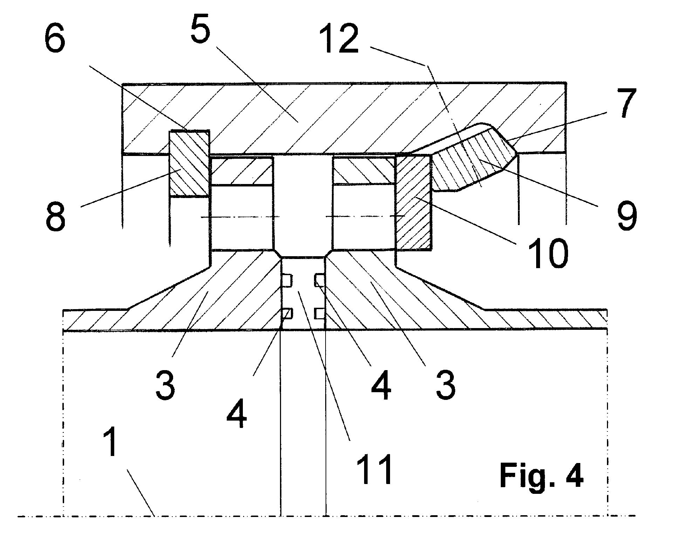

Liegen u.a. an engen Rohrbögen oder an Anschlussflanschen von Armaturen beengte Platzverhältnisse vor, die ein Verschrauben der Abschersegmente mit dem Flanschblatt erschweren, ist ein Übergreifen der Hülse für Flansche vorgesehen, die nicht mit Schrauben gegeneinander verspannt sind (s. Fig. 4). Diese Ausführung bietet sich ebenfalls anstelle der sogenannten Losflanschverbindungen an. Das Sichern der Abschersegmente gegen ein Herausfallen während der Montage erfolgt bei diesen Ausführungsbeispielen gemäß den bekannten Ausführungen von Scherringverschlüssen. Um ein Verkanten der Abschersegmente auszuschließen, sind diese mit der Hülse ggf. zu verschrauben. Insgesamt ist jedoch eine größere Sorgfalt bei der Montage erforderlich, da die zuvor herausgestellten Montageerfahrungen nicht voll zu nutzen sind.

Weisen die Flansche eine Vielzahl von Bohrungen auf, sind zur ausreichenden Anlage der keilförmigen Spannelemente Distanzkörper an dem jeweiligen Flanschblatt zum Überdecken der Bohrungen anzuordnen. Ebenfalls sind bei nichtmetallischen Materialien der zu verbindenden Bauteile zwischen diesen und den an diesen anliegenden AbscherSegmenten und/oder Spannelementen jeweils ein- oder mehrteilige Druckverteilungskörper zum Erzeugen einer möglichst großen Anlagefläche vorzusehen.

Gemäß Anspruch 9 sind vor allem bei größeren Durchmessern in Anlehnung an die DE 10 2012 007 145 A1 Fertigungsvorteile durch nicht zu streng einzuhaltende Bauteiltoleranzen zu erreichen, in dem Ausgleichsstücke zwischen der Hülse und jedem der Spannelemente anzuordnen sind. Weitere fertigungstechnische Vorteile ergeben sich, wenn in der Hülse anstelle der einen Aussparung mehrere Aussparungen zur Anlage von jeweils einem Spannelement angeordnet werden.

Ausführungsbeispiele der Erfindung werden anhand von schematischen Zeichnungen, jeweils im Längsschnitt dargestellt, beschrieben:
- Fig.1: zeigt eine Verbindungsanordnung, in dem eine mit Schrauben verspannte Norm-Flanschverbindung mit der kraft- und formschlüssigen Verbindung gemäß der EP 0 775 863 B1 überspannt ist, wobei Distanzkörper zwischen der Hülse und dem Flanschblatt die am Flansch hervorstehenden Schraubenköpfe / Muttern der Schrauben überdecken.
- Fig. 2: zeigt analog zur Fig. 1 eine Verbindungsanordnung, bei der Distanzkörper zwischen dem Flansch und den Spannelementen ein Innengewinde aufweisen. Die Distanzkörper übernehmen jeweils die Funktion der Mutter.
- Fig. 3: zeigt eine Verbindungsanordnung, in der einer der beiden Flansche als Flanschbund ausgeführt ist.
- Fig. 4: zeigt eine Verbindungsanordnung, bei der eine Hülse zwei NormFlansche übergreift, die nicht mit Schrauben gegeneinander verspannt sind. Distanzkörper überdecken an einem Flansch den Bereich der Bohrungen zur nahezu vollflächigen Anlage der keilförmigen Spannelemente.

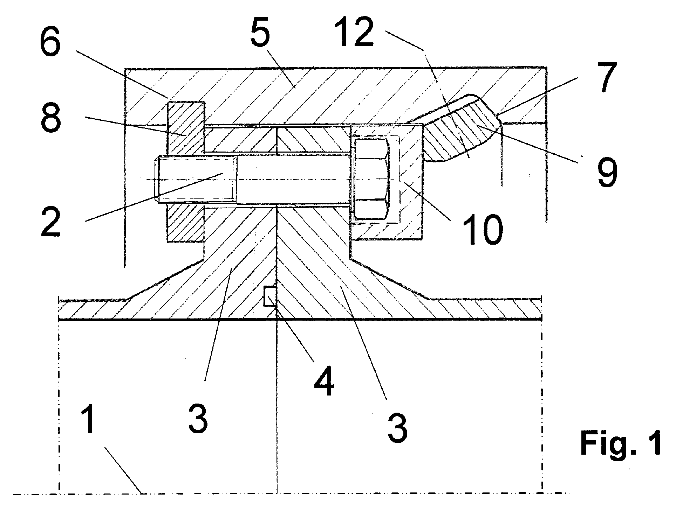

Fig. 1 zeigt in Kombination mit einer kraft- und formschlüssigen Verbindung den Längsschnitt einer komplett mit Schrauben verspannten klassischen Flanschverbindung. Auf einer Längsachse (1) sind zwei Flansche (3) über Schrauben (2) miteinander verspannt. Eine Hülse (5), die beide Flansche übergreift, weist an einem axialen Ende eine umlaufende Nut (6) auf, in der auf Abscheren belastete Segmente (8) angeordnet sind. Um im verspannten Zustand ein Verkanten der Segmente (8) in der Nut (6) und somit hohe Kantenpressungen auszuschließen, sind die Segmente zum Erreichen einer gleichmäßigen Flächenbelastung in der Nut (6) mit Schrauben (2) gegen den Flansch (3) verspannt. Die Stirnflächen liegen in Blocklage gegeneinander.

Am anderen Ende der Hülse (5) ist an der Innenkontur eine Aussparung mit einer Anlagefläche (7) eingearbeitet, in der keilförmige Spannelemente (9) angeordnet sind. Diese weisen zwischen ihren Keilflächen und ihrer Verspannachse (12) einen zur Selbsthemmung führenden Haftreibungswinkel auf. Zwischen den Spannelementen (9) und dem Flansch (3) liegen Distanzkörper (10). Diese überdecken die am Flansch hervorstehenden Schraubenköpfe / Muttern der Schrauben (2). Zwischen den Flanschen (3) ist eine Dichtung (4) im Kraftnebenschluss angeordnet.

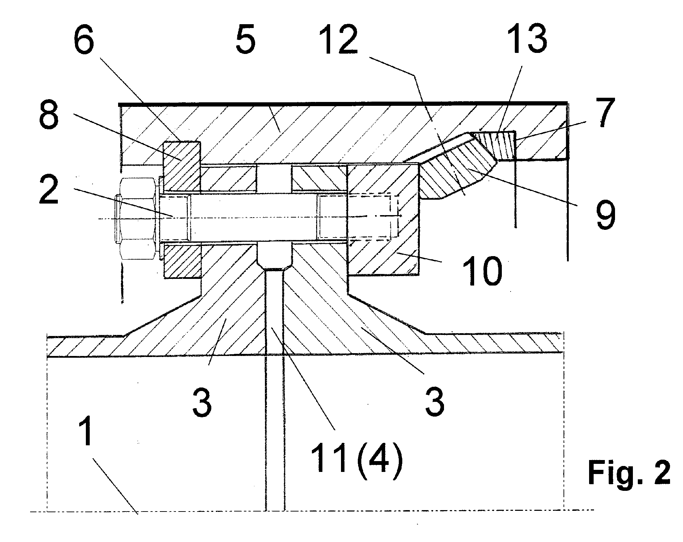

Fig. 2 zeigt analog zur Figur 1 die Ausführung der Distanzkörper (10) mit einem Innengewinde. Diese übernehmen die Funktion der Mutter. Zudem ist entsprechend Anspruch 9 zwischen der Anlagefläche (7) der Hülse (5) und jedem der Spannelemente (9) ein Ausgleichselement (13) angeordnet, u.a. zum Ausgleich von Fertigungstoleranzen bei größeren Durchmessern. Zwischen den Flanschen (3) ist vereinfacht die Dichtung (4) mit Zwischenring (11) als Dichtelement dargestellt.

Fig. 3 zeigt in einem weiteren Ausführungsbeispiel den Längsschnitt einer Verbindungsanordnung für hochtemperaturbelastete Verbindungen. Entsprechend dem Anspruch 6 ist der rechte Flansch als Flanschbund (3') ausgeführt. Die mit dem Flansch (3) verspannten Abschersegmente (8) weisen Bohrungen zum Durchführen der Schrauben (2) auf. In einem zwischen den Stirnflächen angeordneten Zwischenring (11) wirken die Dichtungen (4) im Kraftnebenschluss.

Fig. 4 zeigt analog zur Figur 1 den Längsschnitt einer Verbindungsanordnung, bei der eine Hülse (5) zwei Flansche (3) übergreift, die jedoch nicht mit Schrauben miteinander verspannt sind. Die Distanzkörper (10) zwischen dem Flansch (3) und den keilförmigen Spannelementen (9) überdecken gemäß dem Anspruch 5 die Bohrungen in dem Flansch (3) zum Erreichen einer ausreichenden Anlage der keilförmigen Spannelemente (9). Zwischen den Flanschen (3) ist ein Zwischenring (11) zur Aufnahme von mehreren im Kraftnebenschluss wirkenden Dichtungen (4) angeordnet. Sinngemäß zeigt die Fig. 4 ebenfalls die Ausführungsvariante einer Verbindung gemäß dem Anspruch 4, in dem eine Hülse (5) zwei Flanschbunde (3') anstelle der Flansche (3) übergreift.

### Bezugsziffernliste:

- 1: Längsachse der Verbindung
- 2: Schrauben
- 3, 3': Flansche / Flanschbunde der klassischen Flanschverbindung
- 4: Dichtung
- 5: Beide Flansche / Flanschbunde übergreifende Hülse
- 6: Umlaufende Nut in der Hülse
- 7: Anlagefläche der Spannelemente in der Hülse
- 8: Auf Abscheren belastete Segmente
- 9: Keilförmiges Spannelement
- 10: Distanzkörper
- 11: Zwischenring zur Aufnahme von Dichtungen
- 12: Verspannachse der Spannelemente
- 13: Ausgleichsstück zwischen Hülse und Spannelement

## Patentansprüche

1. Flanschverbindung mit einer übergreifenden kraft- und formschlüssigen Verbindungsanordnung, insbesondere zur Beseitigung und Vermeidung von Undichtigkeiten bei auftretenden extremen Zusatzbelastungen,
mit zwei auf einer Längsachse (1) angeordneten Flanschen (3),
mit Bohrungen in den Flanschen zur Aufnahme von Schrauben (2), **dadurch gekennzeichnet,**
- **dass** eine beide Flansche (3) übergreifende Hülse (5) an einem axialen Ende eine umlaufende Nut (6) und am gegenüberliegenden anderen Ende eine Aussparung mit einer Anlagefläche (7) aufweist,
- **dass** in der Nut (6) Abschersegmente (8) angeordnet sind, die an einem der Flansche (3) anliegen,
- **dass** an dem anderen Flansch (3) Distanzkörper (10) anliegen,
- **dass** zwischen den Distanzkörpern (10) und der Anlagefläche (7) der Hülse (5) keilförmige Spannelemente (9) mit einem zwischen ihren Keilflächen und ihrer Verspannachse (12) zur Selbsthemmung führenden Haftreibungswinkel angeordnet sind und
- **dass** mit dem Verspannen der Spannelemente (9) in Richtung ihrer Verspannachse (12) ein dauerhafter Kraft- und Formschluss zwischen den verspannten Bauteilen zur Übertragung von Belastungen über die Hülse (5) gegeben ist.

2. Flanschverbindung nach Anspruch 1,
**dadurch gekennzeichnet,**
- **dass** die Abschersegmente (8) Bohrungen mit einem Innengewinde zum Eindrehen der Schrauben (2) oder Bohrungen zum Durchführen der Schrauben (2) aufweisen und
- **dass** die Abschersegmente (8) mit Schrauben (2) gegen den anliegenden Flansch (3) verspannt sind.

3. Flanschverbindung nach Anspruch 1 oder 2,
**dadurch gekennzeichnet,**
- **dass** die Distanzkörper (10) die an dem Flansch (3) in Richtung der Längsachse (1) hervorstehenden Schraubenköpfe / Muttern der Schrauben (2) überdecken und gegenüber diesen einen axialen Überstand aufweisen oder
- **dass** die Distanzkörper (10) Bohrungen mit einem Innengewinde zum Eindrehen der Schrauben (2) aufweisen.

4. Flanschverbindung mit einer übergreifenden kraft- und formschlüssigen Verbindungsanordnung, insbesondere zur Beseitigung und Vermeidung von Undichtigkeiten bei auftretenden extremen Zusatzbelastungen,
mit zwei auf einer Längsachse (1) angeordneten Flanschen (3) oder Flanschbunden (3'),
**dadurch gekennzeichnet,**
- **dass** eine beide Flansche (3) oder Flanschbunde (3') übergreifende Hülse (5) an einem axialen Ende eine umlaufende Nut (6) und am gegenüberliegenden anderen Ende eine Aussparung mit einer Anlagefläche (7) aufweist,
- **dass** in der Nut (6) Abschersegmente (8) angeordnet sind, die an einem der Flansche (3) oder Flanschbunde (3') anliegen,
- **dass** zwischen der Anlagefläche (7) der Hülse (5) und dem anderen Flansch (3) oder Flanschbund (3') keilförmige Spannelemente (9) mit einem zwischen ihren Keilflächen und ihrer Verspannachse (12) zur Selbsthemmung führenden Haftreibungswinkel angeordnet sind und
- **dass** mit dem Verspannen der Spannelemente (9) in Richtung ihrer Verspannachse (12) ein dauerhafter Kraft- und Formschluss zwischen den verspannten Bauteilen zur Übertragung von Belastungen über die Hülse (5) gegeben ist.

5. Flanschverbindung nach Anspruch 4,
**dadurch gekennzeichnet,**
- **dass** Distanzkörper (10) zwischen den Spannelementen (9) und dem Flansch (3) oder Flanschbund (3') und/oder
- Distanzkörper (10) zwischen den Abschersegmenten (8) und dem Flansch (3) oder Flanschbund (3') angeordnet sind.

6. Flanschverbindung nach Anspruch 4,
**dadurch gekennzeichnet,**
**dass** die Abschersegmente (8) Bohrungen zum Durchführen von Schrauben (2) aufweisen und mit Schrauben (2) an dem anliegenden Flansch (3) verspannbar sind und dass der andere Flansch (3) als Flanschbund (3') oder Blindflansch ausgeführt ist.

7. Flanschverbindung nach einem der Ansprüche 1 bis 6,
**dadurch gekennzeichnet,**
**dass** zwischen den zu verbindenden Bauteilen (3, 3') eine Dichtung (4) oder mehrere Dichtungen (4) in einem zwischen den zu verbindenden Bauteilen (3, 3') angeordneten Zwischenring (11) im Kraftnebenschluss angeordnet sind.

8. Flanschverbindung nach einem der Ansprüche 1 bis 6,
**dadurch gekennzeichnet,**
**dass** zwischen den zu verbindenden Bauteilen (3, 3') eine Dichtung (4) im Krafthauptschluss angeordnet ist, die nach dem Verspannen infolge ihres Relaxationsverhaltens eine über einen langen Betriebszeitraum nahezu konstante Dichtungsflächenpressung aufweist.

9. Flanschverbindung nach einem der Ansprüche 1 bis 8,
**dadurch gekennzeichnet,**
- **dass** anstelle der einen Aussparung in der Hülse (5) mehrere Aussparungen mit je einer Anlagefläche (7) angeordnet sind, an der jeweils ein Spannelement (9) anliegt oder
- **dass** zwischen der einen Anlagefläche (7) der Hülse (5) und jedem der Spannelemente (9) ein Ausgleichselement (13) angeordnet ist.

10. Flanschverbindung nach einem der Ansprüche 1 bis 9,
**dadurch gekennzeichnet,**
**dass** bei nichtmetallischen Materialien der zu verbindenden Flansche (3) oder Flanschbunde (3') zwischen diesen und den jeweils an diesen anliegenden Abschersegmenten (8) und/oder Spannelementen (9) ein ein- oder mehrteiliger Druckverteilungskörper angeordnet ist.
